(19) Europäisches Patentamt
European Patent Office
Office européen des brevets

(11)  **EP 1 923 558 B1**

(12)  **FASCICULE DE BREVET EUROPEEN**

(45) Date de publication et mention
de la délivrance du brevet:
**17.08.2016  Bulletin 2016/33**

(51) Int Cl.:
*F02D 35/02* *(2006.01)*   *F02D 41/40* *(2006.01)*
*F02D 41/22* *(2006.01)*

(21) Numéro de dépôt: **07120745.0**

(22) Date de dépôt: **15.11.2007**

(54) **Système et procédé de commande d'un moteur à combustion interne**

Steuersystem und -verfahren eines Verbrennungsmotors

System and method of controlling an internal combustion engine

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **15.11.2006  FR 0654924**

(43) Date de publication de la demande:
**21.05.2008  Bulletin 2008/21**

(73) Titulaire: **Renault s.a.s.**
**92100 Boulogne Billancourt (FR)**

(72) Inventeurs:
• **Emery, Pascal**
**92400, Courbevoie (FR)**
• **Roth, Richard**
**92000, Nanterre (FR)**
• **Bollaert-Varteressian, Sophie**
**78150, Le Chesnay (FR)**

(56) Documents cités:
**EP-A- 1 496 237     EP-A- 1 607 609
EP-A1- 0 834 650     EP-A2- 1 128 050
DE-A1- 19 945 369     GB-A- 2 244 514
JP-A- 58 107 826**

**Description**

La présente invention a pour objet un système et un procédé de commande d'un moteur à combustion interne à injection, notamment de type Diesel, permettant le contrôle de l'injection du carburant. Le fonctionnement de ce type de moteur est généralement géré par une unité de contrôle électronique. L'unité de commande électronique réunit, entre autres, tous les moyens nécessaires au contrôle de l'injection et au calcul des différents paramètres nécessaires à un tel contrôle. Elle est reliée à un ensemble de capteurs et d'actionneurs lui permettant de contrôler le fonctionnement du cylindre et donc du moteur.

Le contrôle de l'injection permet aux constructeurs de maîtriser non seulement la consommation de carburant mais également les émissions de polluants. De nombreuses stratégies ont été conçues afin de corriger les dispersions, dérives et déphasages de l'injection, mais peu s'intéressent à la protection du moteur vis-à-vis des problèmes d'écarts d'injection pouvant apparaître lors de l'application de ces stratégies. Les cylindres du moteur courent en effet un risque d'endommagement si la pression à l'intérieur de la chambre de combustion dépasse une valeur limite. Une telle situation peut être prévenue en surveillant l'augmentation du gradient de pression dans le cylindre par degré d'angle du vilebrequin. Dans ce contexte, une erreur momentanée de débit ou de phasage de l'injection peut provoquer une destruction rapide du moteur. Il est donc important de mettre en place des moyens permettant la protection du moteur.

Plusieurs moyens existent pour protéger un moteur vis-à-vis des mauvaises combustions ou des surcharges. Pour détecter les mauvaises combustions, caractérisées généralement par l'absence de combustion et/ou l'apparition de cliquetis, on peut utiliser des détecteurs de bruits, comme divulgué dans les demandes de brevet JP11247750 et DE19612180. Une fois détectées, il est possible de mettre en place un procédé de correction en jouant, par exemple, sur l'avance à l'allumage pour les moteurs essence. Une méthode alternative pour gérer les surpressions est proposée dans la demande de brevet FR2748295 où l'on utilise des bougies de préchauffage expulsables pour moteur Diesel. Les moyens de fixation de chaque bougie sont conçus pour céder lors du dépassement de la pression limite susceptible d'endommager la chambre de combustion. Une telle méthode de protection est lourde et coûteuse.

La demande de brevet US4745901 propose de limiter la durée de fonctionnement en pleine charge du moteur à une durée prédéfinie. Au delà de cette durée, les performances du moteur sont limitées. La contrepartie est une réduction de la puissance du moteur.

Une façon plus élégante de prévenir une surcharge est présentée dans la demande de brevet JP56126644. Elle consiste à mesurer, grâce à un débitmètre, le débit d'air admis dans le moteur et à le comparer à une valeur prédéfinie correspondant à une situation de surcharge. Si la mesure est effectivement supérieure à la valeur prédéfinie, la quantité de carburant injectée est réduite pour éviter une surcharge du moteur.

On a également déjà préconisé d'utiliser un capteur de pression pour mesurer la pression à l'intérieur de la chambre de combustion. Dans ce cadre, la demande de brevet JP200504753 propose d'optimiser le phasage de l'injection principale à partir de la détection de l'augmentation de pression lors de la combustion d'une pré-injection de carburant. La quantité de carburant utilisée lors de cette pré-injection est réduite par rapport à l'injection principale. Cela permet de contrôler plus précisément le moment où doit être déclenchée l'injection principale. La demande de brevet FR2762647 propose de corriger la dispersion de compression d'une chambre de combustion à l'autre. Pour cela, on mesure la pression dans la chambre de combustion au début de l'injection et on utilise un modèle pour optimiser la durée de la prochaine injection en fonction de la mesure de pression.

La demande de brevet EP1103708 propose d'utiliser un calculateur basé sur un réseau neuronal pour prédire l'évolution de la pression dans la chambre de combustion à partir des mesures de la pression dans la chambre de combustion et de la position du piston.

La demande de brevet JP2004044417 propose d'utiliser une double injection pilote pour estimer la quantité de carburant à injecter lors de la première injection pilote afin de maintenir un bruit acceptable. Dans ce cas, la deuxième injection pilote est déclenchée lorsque la pression d'injection se trouve sur un minimum de l'onde de pression engendrée par la première injection pilote. Le bruit de combustion est estimé à partir de la mesure du capteur de pression dans le cylindre et permet de corriger la quantité de carburant à injecter lors de la première injection pilote si le bruit est jugé inacceptable.

On peut également procéder à une sommation des taux maximaux de pressions de combustion enregistrées lors des injections pilotes et principales et comparer le résultat à une valeur de référence, comme décrit dans la demande de brevet JP200528244. Le résultat de cette comparaison permet alors de modifier la quantité de carburant injectée. Un autre document illustratif de l'état de technique est la publication de demande de brevet EP 1 607 609 A1.

Si toutes ces stratégies permettent de prendre des mesures de protection à la suite d'une surpression, aucune ne met en place de mesures préventives. La présente invention a pour objet de remédier à cette situation et de proposer un système et un procédé de prévention des surpressions dans le cadre d'une gestion de l'injection incluant l'utilisation d'injections pilotes.

Un autre objet de la présente invention est la correction des situations de surpression en corrigeant la quantité de carburant injecté. Enfin, l'invention a également pour objet la protection du moteur contre l'endommagement en réduisant les performances du moteur après détection d'un défaut d'injection.

Dans un mode de réalisation, un système de commande d'un moteur à combustion interne à injection de carburant contrôlée comprenant au moins un cylindre comprend un moyen de détermination de la pression dans le cylindre, un moyen de mesure de l'angle du vilebrequin, un moyen de calcul de la dérivée de la pression en fonction de l'angle du vilebrequin, ainsi que des moyens de modulation de l'injection capables de comparer les valeurs mesurées et calculées à des valeurs limites mémorisées.

Un tel système permet de surveiller la pression et la variation de pression, deux paramètres révélateurs d'une situation potentiellement dangereuse pour les cylindres d'un moteur. Mesurer la pression dans la chambre de combustion permet de surveiller l'apparition d'une surpression dans le cylindre. Calculer la variation de pression lors de l'avancement du cycle de combustion permet de prévoir l'évolution de la pression dans la chambre de combustion. Ainsi on peut s'assurer qu'une surpression n'est pas présente et qu'elle ne risque pas d'apparaître à cause d'une augmentation incontrôlée de la pression dans le cylindre. La modification de la quantité de carburant injectée s'applique de préférence à l'injection pilote. La modulation de la quantité de carburant injectée au cours de l'injection pilote permet de limiter les surpressions lors de l'injection principale. Cependant, le système pourrait appliquer les mêmes mécanismes de régulation à l'injection principale s'il détecte que la pression dans le cylindre reste à une valeur dangereuse, ou s'il n'y a pas d'injection pilote.

Dans un tel système, la commande d'injection déclenche une injection, dite pilote, avant l'injection principale. Les moyens de modulation d'injection sont alors capables de moduler la quantité de carburant injectée lors de l'injection pilote.

Selon un autre aspect de l'invention, un procédé de commande d'un moteur à combustion interne à injection de carburant contrôlée comprenant au moins un cylindre, permet de réguler la quantité de carburant injectée en fonction de la pression dans le cylindre et de la dérivée de la pression en fonction de l'angle du vilebrequin.

Dans un autre mode de mise en oeuvre, l'injection principale est précédée d'une injection pilote, caractérisé par le fait que la quantité de carburant injectée durant l'injection pilote est réduite d'une quantité de carburant dépendant de la comparaison entre des valeurs de la pression mesurées au cours du cycle et des valeurs limites mémorisées.

Dans un tel procédé, la quantité de carburant injectée lors de l'injection pilote est rétablie à sa valeur nominale si la pression maximale du cylindre reste inférieure à la pression limite mémorisée, après un nombre de cycles mémorisé.

Dans un mode de mise en oeuvre, la quantité de carburant injectée lors de l'injection principale est réduite si la pression maximale dans le cylindre au cours du cycle reste supérieure à la pression limite mémorisée, pendant un nombre de cycles mémorisé malgré les corrections successives de la quantité de carburant de l'injection pilote.

Dans un mode d'application, l'invention permet la protection des cylindres d'un moteur à combustion interne contre l'endommagement dû aux surpressions.

D'autres buts, caractéristiques et avantages de l'invention apparaîtront à la lecture de la description suivante, donnée uniquement à titre d'exemples non limitatifs et faite en référence aux dessins annexés sur lesquels :

la figure 1 représente une vue en coupe d'un cylindre de moteur à combustion interne et de son électronique de commande ; et

les figures 2 et 3 représentent un exemple de schéma synoptique montrant l'enchaînement des étapes de commande d'une injection pilote.

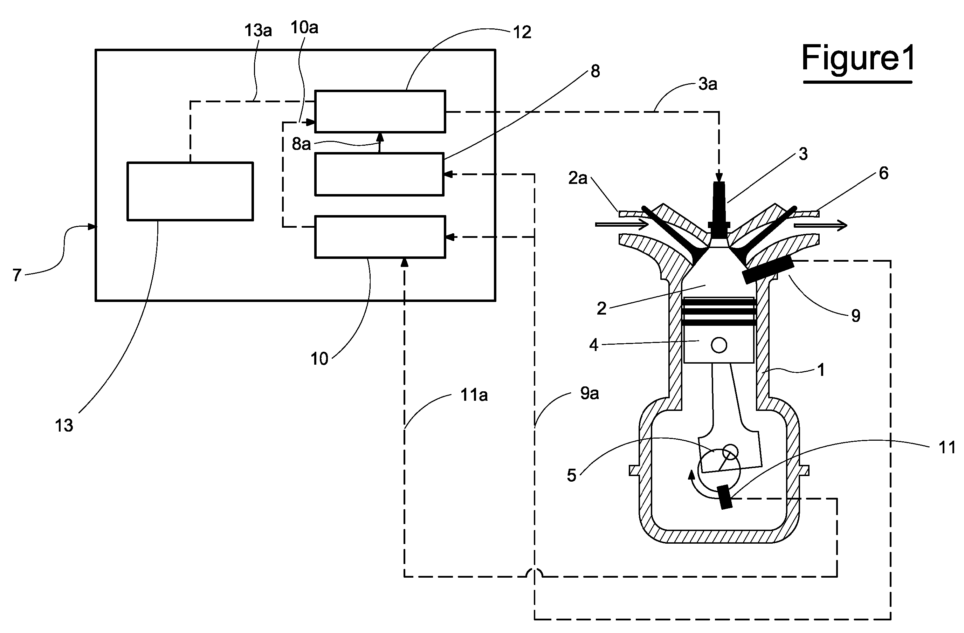

La figure 1 est une vue en coupe d'un cylindre 1 de moteur à combustion interne et de son électronique de commande. Lors d'un cycle de combustion les gaz sont admis par la cannelure 2a dans la chambre de combustion 2. L'injecteur 3 injecte d'abord une quantité pilote de carburant suivie d'une quantité principale de carburant. La combustion du mélange met le piston 4 en mouvement. Le vilebrequin 5 transforme le mouvement du piston en rotation. Les gaz sont ensuite évacués par la cannelure d'échappement 6. Au cours de la combustion, la pression des gaz à l'intérieur de la chambre de combustion peut dépasser les limites d'endommagement. Pour prévenir cela, la pression est surveillée par l'unité de contrôle électronique 7 via le moyen 8 d'estimation de la pression lui-même connecté à un capteur 9 de pression par la liaison 9a. En parallèle, et pour prévenir une situation de surpression, l'unité de contrôle électronique surveille la variation de la pression dans la chambre de combustion. Pour cela, un moyen 10 de calcul de la dérivée de la pression en fonction de l'angle du vilebrequin 5 est connecté à un capteur 11 d'angle du vilebrequin par la liaison 11a et au capteur 9 de pression par la liaison 9a. Les moyens 8 et 10 sont reliés au moyen 12 de commande de l'injection par les connexions 8a et 10a respectivement. Le moyen 12 de commande de l'injection détermine alors la quantité de carburant à injecter lors du prochain cycle selon les valeurs de la pression et de la dérivée de la pression en fonction de l'angle du vilebrequin 5. Le moyen 12 de commande est relié au moyen 3 d'injection par la liaison 3a. Le moyen 12 de commande est également connecté à un moyen 13 de mémorisation par la liaison 13a.

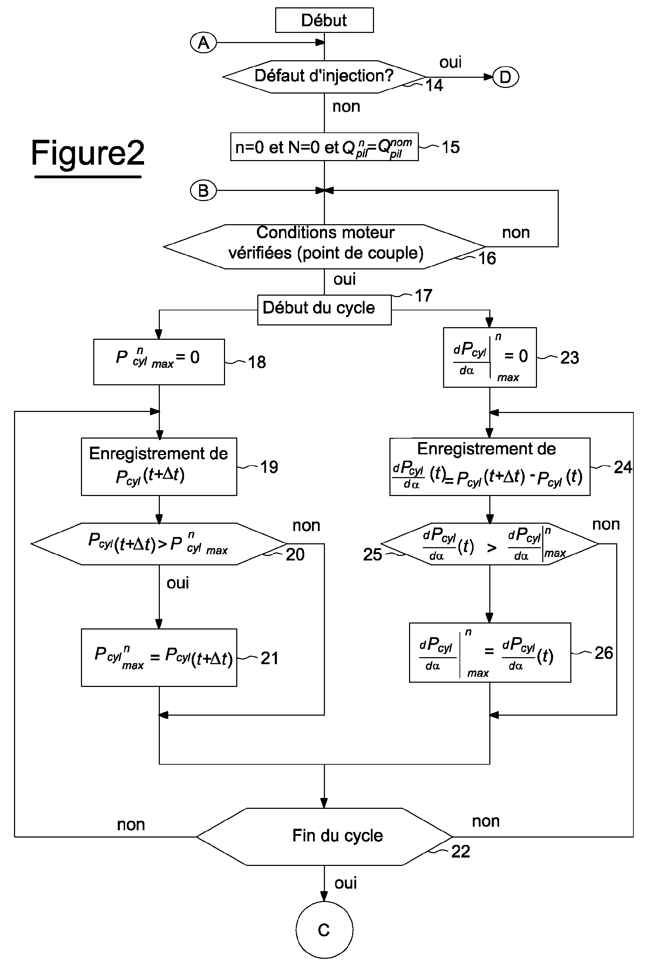

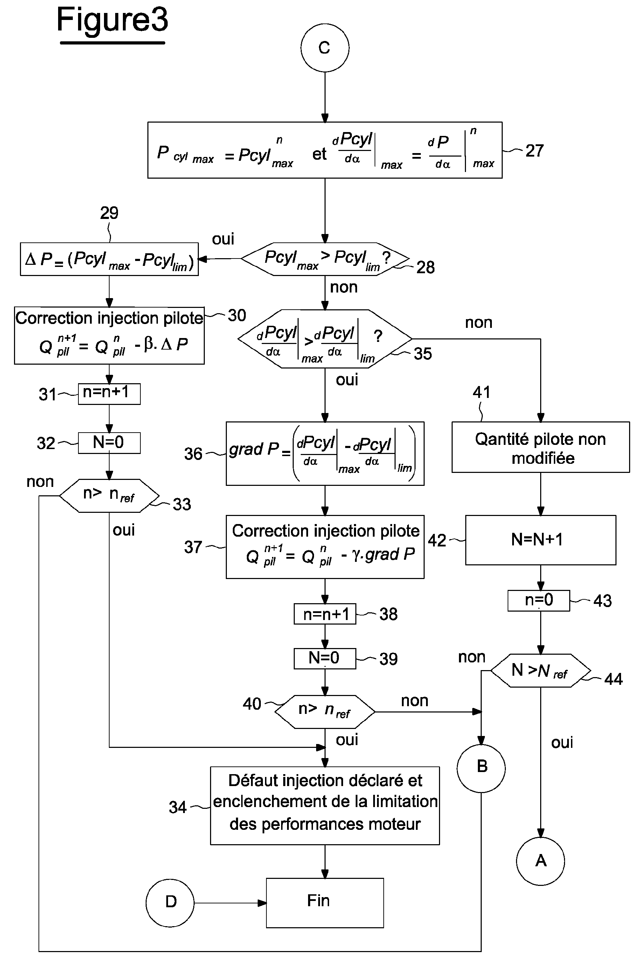

Un mode particulier de réalisation est illustré sur les figures 2 et 3. On peut y voir représenté les deux parties du schéma synoptique de l'enchaînement des étapes de commande d'une injection pilote. Le procédé commence par une étape 14 de vérification de la présence d'un défaut d'injection. Si un défaut est présent. le procédé est stoppé. Sinon, on passe à une étape 15 de remise à zéro du compteur n du nombre de cycles écoulés depuis la dernière correction de la quantité de carburant injectée lors de l'injection pilote et du compteur N du nombre de cycles sans correction de la quantité de carburant injectée lors de l'injection pilote. Au cours de la même étape, on initialise la quantité de carburant $Q^n_{pil}$ injectée lors de l'injection pilote pour le cycle en cours à sa valeur nominale mémorisée $Q^{nom}_{pil}$. Une étape 16 de mise en attente du procédé a lieu tant que les conditions de fonctionnement du moteur ne rentrent pas dans une plage de valeurs prédéfinies. Ces conditions portent essentiellement sur des plages de régimes de rotation du moteur et de débit de carburant. Une fois vérifiées, le cycle 17 de mesure des paramètres du cylindre peut commencer.

Au cours de l'étape 18, on met à zéro la valeur de la pression maximale $P^n_{cyl\ max}$ dans le cylindre au cours du cycle en cours. On enregistre ensuite, au cours de l'étape 19, la pression $P_{cyl}$ des gaz à l'intérieur du cylindre. Pendant l'étape 20, on compare chaque mesure de pression au maximum de pression $P^n_{cyl\ max}$ enregistré au cours du cycle. Si la valeur mesurée est inférieure au maximum de pression $P^n_{cyl\ max}$ enregistré au cours du cycle, on passe à l'étape 22 sinon on passe à l'étape 21. Au cours de l'étape 21, la valeur mesurée $P_{cyl}$ devient la nouvelle valeur maximale $P^n_{cyl\ max}$. Au cours de l'étape 22, on vérifie si le cycle en cours est terminé Si c'est le cas, on passe à l'étape 27 sinon le cycle reprend à l'étape 19.

En parallèle, pendant l'étape 23, on met à zéro la valeur maximale $\left.\dfrac{dP_{cyl}}{d\alpha}\right|^n_{max}$ de la dérivée de la pression dans le cylindre en fonction de l'angle du vilebrequin au cours du cycle en cours. On calcule, pendant l'étape 24, la dérivée $\dfrac{dP_{cyl}}{d\alpha}(t)$ de la pression des gaz à l'intérieur du cylindre en fonction de l'angle du vilebrequin à l'instant t, comme étant la différence entre la pression des gaz $P_{cyl}(t+\Delta t)$ dans le cylindre à un temps $t+\Delta t$ et la pression des gaz $P_{cyl}(t)$ à un temps t. Le calcul de la dérivée de la pression exige donc deux valeurs de la pression des gaz dans le cylindre séparées l'une de l'autre par un intervalle de temps $\Delta t$. A cause de cela, la dérivée de la pression en fonction de l'angle du vilebrequin 5 ne peut être calculée qu'après un intervalle de temps $\Delta t$ après le début de la mesure de la pression. De plus, on estime que le déplacement du vilebrequin 5 pendant cet espace de temps $\Delta t$ est égal à l'unité. Au cours de l'étape 25, on compare chaque mesure $\dfrac{dP_{cyl}}{d\alpha}(t)$ au maximum enregistré au cours du cycle $\left.\dfrac{dP_{cyl}}{d\alpha}\right|^n_{max}$, si la valeur mesurée est inférieure à la valeur maximale mémorisée, on passe à l'étape 22. Sinon, la valeur mesurée devient la nouvelle valeur maximale au cours de l'étape 26. Au cours de l'étape 22, on vérifie si le cycle en cours est terminé. Si c'est le cas, on passe à l'étape 27 sinon le cycle reprend à l'étape 24.

L'étape 27 permet d'initialiser la valeur maximale $P_{cyl\ max}$ de la pression dans le cylindre à la valeur maximale $P^n_{cyl\ max}$ de la pression dans le cylindre au cours du cycle en cours. De même, on initialise la valeur maximale $\left.\dfrac{dP_{cyl}}{d\alpha}\right|_{max}$ de la dérivée de la pression en fonction de l'angle du vilebrequin 5 à la valeur maximale $\left.\dfrac{dP_{cyl}}{d\alpha}\right|^n_{max}$ de la dérivée de la pression en fonction de l'angle du vilebrequin 5 au cours du cycle en cours. Lors de l'étape 28. on compare, la valeur maximale $P_{cyl\ max}$ de la pression dans le cylindre à la valeur limite $P_{cyl\ lim}$ de la pression dans le cylindre 1.

Si la pression maximale $P_{cyl\ max}$ est supérieure à la valeur limite $P_{cyl\ lim}$, on passe à l'étape 29 où l'on calcule la différence $\Delta P$ entre la valeur maximale $P_{cyl\ max}$ et la valeur limite $P_{cyl\ lim}$, suit ensuite l'étape 30 pendant laquelle on corrige la quantité de carburant $Q^{n+1}_{pil}$ à injecter lors de la prochaine injection pilote Pour cela, on retranche une quantité proportionnelle $\beta.\Delta P$ à la différence entre pressions maximale et limite de la quantité de carburant $Q^n_{pil}$ à injecter lors de l'injection pilote. L'étape 31 permet d'augmenter le compteur n de cycles d'une unité et le compteur N de nombre de cycles est remis à zéro pendant l'étape 32. Au cours de l'étape 33, on compare ensuite la valeur du compteur n au nombre mémorisé $n_{ref}$ de cycles avant de déclarer un défaut d'injection. Si la valeur du compteur n est inférieure à la valeur de $n_{ref}$, on revient à la l'étape 16 de vérification des conditions de fonctionnement du moteur. Sinon, on déclare un défaut d'injection avec l'étape 34.

Au cours de l'étape 28, si la pression maximale $P_{cyl\ max}$ est inférieure à la valeur limite $P_{cyl\ lim}$, on passe à l'étape 35 au cours de laquelle on compare la valeur maximale $\left.\dfrac{dP_{cyl}}{d\alpha}\right|_{max}$ de la dérivée de la pression en fonction de l'angle du vilebrequin à la valeur limite mémorisée $\left.\dfrac{dP_{cyl}}{d\alpha}\right|_{lim}$.

Si la valeur maximale est supérieure à la valeur limite, on passe à l'étape 36 et on calcule la différence grad P entre la valeur maximale $\left.\dfrac{dP_{cyl}}{d\alpha}\right|_{max}$ et la valeur

limite $\left.\dfrac{dP_{cyl}}{d\alpha}\right|_{lim}$ , puis on corrige pendant l'étape 37 la quantité de carburant $Q_{pil}^{n+1}$ à injecter au cours du cycle suivant en retranchant une quantité proportionnelle $\gamma$. grad P à la différence entre les valeurs maximale et limite de la quantité de carburant $Q_{pil}^{n}$ injectée lors de l'injection pilote du cycle en cours. On augmente le compteur de cycles n d'une unité à l'étape 38 et on met à zéro le compteur de nombre de cycles N pendant l'étape 39. Au cours de l'étape 40, on compare la valeur du compteur de cycles n au nombre mémorisé $n_{ref}$ de cycles avant de déclarer un défaut d'injection. Si la valeur du compteur est inférieure à la valeur mémorisée, on revient à l'étape 16 de vérification des conditions de fonctionnement du moteur. Sinon, on déclare un défaut d'injection au cours de l'étape 34.

Si la valeur maximale $\left.\dfrac{dP_{cyl}}{d\alpha}\right|_{max}$ est inférieure

à la valeur limite $\left.\dfrac{dP_{cyl}}{d\alpha}\right|_{lim}$ lors de l'étape 35, on ne modifie pas la quantité de carburant injectée lors de l'injection pilote à l'étape 41, on incrémente le compteur N d'une unité à l'étape 42 et on remet à zéro le compteur de cycles n à l'étape 43. Au cours de l'étape 44, on compare la valeur du compteur N de nombre de cycles sans correction de l'injection à la valeur de référence $N_{ref}$ avant rétablissement de la quantité de carburant pilote. Si la valeur de référence est inférieure à la valeur de référence, on retourne à l'étape 16 de vérification des conditions de fonctionnement du moteur. sinon on revient à l'étape 14.

Au cours de la présente description il a été montré un mode particulier de réalisation d'un système de commande d'un moteur à combustion interne utilisant une injection pilote declenchée avant l'injection principale. Le système de commande utilise des mesures de pression des gaz dans le cylindre et de position du vilebrequin pour estimer la pression des gaz au cours des différentes phases de fonctionnement du moteur ainsi que pour prévoir son évolution. Il serait concevable d'appliquer ce mode de réalisation à un système de commande d'un moteur à combustion interne n'utilisant pas d'injection pilote, mais utilisant les mêmes principes de surveillance de la pression et de correction de la quantité de carburant injectée.

**Revendications**

1. Système de commande d'un moteur à combustion interne à injection de carburant contrôlée comprenant au moins un cylindre (1), et des moyens d'injection (3) de carburant dans ledit cylindre,

- un moyen (8) de mesure de la pression dans le cylindre,
- un moyen de mesure (11) de l'angle du vilebrequin,
- un moyen (10) de calcul de la dérivée de la pression en fonction de l'angle du vilebrequin,
- un moyen de commande d'injection (12) déclenchant une injection, dite pilote, avant l'injection principale,
**caractérisé par le fait que** le moyen de commande d'injection (12) est capable de comparer les valeurs mesurées de la pression dans le cylindre et les valeurs calculées de la variation de pression dans le cylindre en fonction de l'angle du vilebrequin à des valeurs limites mémorisées, et de corriger la quantité de carburant injecté lors de l'injection pilote,
- en fonction de la pression dans le cylindre, si la pression est supérieure à une première valeur limite, ou
- en fonction de la variation de la pression dans le cylindre, si la pression est inférieure à la première valeur limite et si la valeur maximale de la dérivée de la pression en fonction de l'angle du vilebrequin est supérieure à une seconde valeur limite.

2. Procédé de commande d'un moteur à combustion interne à injection de carburant contrôlée comprenant au moins un cylindre, dans lequel une injection principale est précédée d'une injection pilote, **caractérisé par le fait que** la quantité de carburant injectée lors de l'injection pilote est régulée :

- en fonction de la pression dans le cylindre si la pression est supérieure à une première valeur limite,
- en fonction de la variation de la pression dans le cylindre en fonction de l'angle du vilebrequin si la pression est inférieure à la première valeur limite et si la valeur maximale de la dérivée de la pression en fonction de l'angle du vilebrequin est supérieure à une seconde valeur limite.

3. Procédé de commande selon la revendication 2, **caractérisé par le fait que** la quantité de carburant injectée lors de l'injection pilote est rétablie à sa valeur nominale si la pression maximale du cylindre reste inférieure à la première valeur limite de pression mémorisée, après un nombre de cycles mémorisé.

4. Procédé de commande selon la revendication 3, **caractérisé par le fait que** la quantité de carburant injectée lors de l'injection principale est réduite si la pression maximale dans le cylindre au cours du cycle reste supérieure à la première valeur limite de pression mémorisée, pendant un nombre de cycles mémorisé malgré les corrections successives de la quantité de carburant de l'injection pilote.

5. Application d'un système de commande selon la revendication 1, à la protection des cylindres d'un moteur à combustion interne contre l'endommagement dû aux surpressions.

**Patentansprüche**

1. Steuersystem eines Verbrennungsmotors mit geregelter Kraftstoffeinspritzung, umfassend mindestens einen Zylinder (1) und Kraftstoffeinspritzmittel (3) in dem Zylinder,

    - ein Mittel (8) zum Messen des Drucks in dem Zylinder,
    - ein Mittel zum Messen (11) des Kurbelwellenwinkels,
    - ein Mittel (10) zum Berechnen der Ableitung des Drucks in Abhängigkeit von dem Kurbelwellenwinkel,
    - ein Einspritzsteuermittel (12), das vor der Haupteinspritzung eine Einspritzung auslöst, eine sogenannte Voreinspritzung,
    **dadurch gekennzeichnet, dass** das Einspritzsteuermittel (12) in der Lage ist, die gemessenen Werte des Drucks in dem Zylinder und die in Abhängigkeit von dem Kurbelwellenwinkel berechneten Werte der Druckabweichung in dem Zylinder mit den gespeicherten Grenzwerten zu vergleichen und die Kraftstoffmenge, die bei der Voreinspritzung eingespritzt wird, wie folgt zu korrigieren:

        - in Abhängigkeit von dem Druck in dem Zylinder, wenn der Druck größer ist als ein erster Grenzwert, oder
        - in Abhängigkeit von der Druckabweichung in dem Zylinder, wenn der Druck kleiner ist als der erste Grenzwert und wenn der Maximalwert der Ableitung des Drucks in Abhängigkeit von dem Kurbelwellenwinkel größer ist als ein zweiter Grenzwert.

2. Steuerverfahren eines Verbrennungsmotors mit geregelter Kraftstoffeinspritzung, der mindestens einen Zylinder umfasst, in dem einer Haupteinspritzung eine Voreinspritzung vorausgeht, **dadurch gekennzeichnet, dass** die Kraftstoffmenge, die bei der Voreinspritzung eingespritzt wird, wie folgt geregelt wird:

        - in Abhängigkeit von dem Druck in dem Zylinder, wenn der Druck größer ist als ein erster Grenzwert,
        - in Abhängigkeit von der Druckabweichung in dem Zylinder in Abhängigkeit von dem Kurbelwellenwinkel, wenn der Druck kleiner ist als der erste Grenzwert und wenn der Maximalwert der Ableitung des Drucks in Abhängigkeit von dem Kurbelwellenwinkel größer ist als ein zweiter Grenzwert.

3. Steuerverfahren nach Anspruch 2, **dadurch gekennzeichnet, dass** die Kraftstoffmenge, die bei der Voreinspritzung eingespritzt wird, wieder auf ihren Sollwert zurückgesetzt wird, wenn der Maximaldruck des Zylinders nach einer gespeicherten Anzahl von Zyklen kleiner bleibt als der erste gespeicherte Grenzwert des Drucks.

4. Steuerverfahren nach Anspruch 3, **dadurch gekennzeichnet, dass** die Kraftstoffmenge, die bei der Haupteinspritzung eingespritzt wird, reduziert wird, wenn der Maximaldruck in dem Zylinder im Laufe des Zyklus während einer gespeicherten Anzahl von Zyklen trotz der aufeinanderfolgenden Korrekturen der Kraftstoffmenge der Voreinspritzung größer bleibt als der erste gespeicherte Grenzwert des Drucks.

5. Anwendung eines Steuersystems nach Anspruch 1 zum Schutz der Zylinder eines Verbrennungsmotors vor Schäden durch Überdrücke.

**Claims**

1. System for controlling a controlled fuel-injected internal combustion engine comprising at least one cylinder (1) and fuel-injection means (3) for injecting fuel into the said cylinder,

    - a measurement means (8) for measuring the pressure in the cylinder,
    - a measurement means (11) for measuring crank angle,
    - a calculation means (10) for calculating the derivative of pressure with respect to crank angle,
    - an injection-control means (12) triggering an injection, referred to as a pilot injection, before the main injection,
    **characterized in that** the injection-control means (12) is capable of comparing the measured values of cylinder pressure and the calculated values of how cylinder pressure varies as a function of crank angle against limit values stored in memory and of correcting the quantity of fuel injected during the pilot injection,
    - as a function of the cylinder pressure, if the pressure is above a first limit value, or
    - as a function of the variation in cylinder pressure, if the pressure is below the first limit value and if the maximum value of the derivative of pressure as a function of crank angle is above a second limit value.

2. Method for controlling a controlled fuel-injected internal combustion engine comprising at least one cylinder, in which a main injection is preceded by a pilot injection, **characterized in that** the quantity of fuel injection during the pilot injection is regulated:

- as a function of cylinder pressure if the pressure is above a first limit value,
- as a function of the variation in cylinder pressure as a function of crank angle if the pressure is below the first limit value and if the maximum value of the derivative of pressure as a function of crank angle is above a second limit value.

3. Control method according to Claim 2, **characterized in that** the quantity of fuel injected during the pilot injection is reset to its nominal value if the maximum cylinder pressure remains below the first pressure limit value stored in memory after a memory-stored number of cycles.

4. Control method according to Claim 3, **characterized in that** the quantity of fuel injected during the main injection is reduced if the maximum cylinder pressure during the cycle remains above the first memory-stored pressure limit value for a memory-stored number of cycles despite the successive corrections made to the quantity of fuel in the pilot injection.

5. Application of a control system according to Claim 1 to protecting the cylinders of an internal combustion engine from damage caused by overpressure.

Figure1

# Figure2

# Figure3

C

$$P_{cyl\ max} = Pcyl^{\,n}_{max} \quad et \quad \left.\frac{dPcyl}{d\alpha}\right|_{max} = \left.\frac{dP}{d\alpha}\right|^{\,n}_{max}$$ ~ 27

29

$$\Delta P = (Pcyl_{max} - Pcyl_{lim})$$

oui ← $Pcyl_{max} > Pcyl_{lim}\ ?$ ~ 28

non

Correction injection pilote ~30
$$Q^{\,n+1}_{pil} = Q^{\,n}_{pil} - \beta \cdot \Delta P$$

$$\left.\frac{dPcyl}{d\alpha}\right|_{max} > \left.\frac{dPcyl}{d\alpha}\right|_{lim}\ ?$$ ~ 35

non

31 ~ n=n+1

32 ~ N=0

non

n> $n_{ref}$ ~ 33

oui

36 ~ $$grad\ P = \left(\left.\frac{dPcyl}{d\alpha}\right|_{max} - \left.\frac{dPcyl}{d\alpha}\right|_{lim}\right)$$

oui

41

Qantité pilote non modifiée

Correction injection pilote ~ 42
37 ~ $$Q^{\,n+1}_{pil} = Q^{\,n}_{pil} - \gamma \cdot grad\ P$$

N=N+1

38 ~ n=n+1

n=0 ~ 43

39 ~ N=0

non

40 ~ n> $n_{ref}$ — non → B

N > $N_{ref}$ ~ 44

oui

oui

Défaut injection déclaré et enclenchement de la limitation des performances moteur
34 ~

B

A

D → Fin

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 11247750 B
- DE 19612180
- FR 2748295
- US 4745901 A
- JP 56126644 B
- JP 200504753 B
- FR 2762647
- EP 1103708 A
- JP 2004044417 B
- JP 200528244 B
- EP 1607609 A1